## Europäisches Patentamt

## European Patent Office

## Office européen des brevets

(11) Veröffentlichungsnummer: **0 065 151**
**B1**

(12) ## EUROPÄISCHE PATENTSCHRIFT

(45) Veröffentlichungstag der Patentschrift:
19.11.87

(51) Int. Cl.⁴: **B 60 T 8/26**

(21) Anmeldenummer: 82103665.4

(22) Anmeldetag: 29.04.82

(54) Luftdruck-Regler für die Vorderachsenbremsen von Fahrzeugen.

(30) Priorität: 14.05.81 IT 2169081

(43) Veröffentlichungstag der Anmeldung:
24.11.82 Patentblatt 82/47

(45) Bekanntmachung des Hinweises auf die Patenterteilung:
19.11.87 Patentblatt 87/47

(84) Benannte Vertragsstaaten:
DE FR GB NL

(56) Entgegenhaltungen:
DE - A - 1 926 409
FR - A - 1 555 079
FR - A - 1 560 725
US - A - 3 420 256
US - A - 3 492 052
US - A - 3 769 997

(73) Patentinhaber: **Fabbrica Italiana Magneti Marelli S.p.A.,**
**Piazza San Ambrogio 6, Mailand (IT)**

(72) Erfinder: **Saggin, Ruggero, Via Asiago, 13, Cernusco sul**
**Naviglio (Milano) (IT)**
Erfinder: **Riva, Corrado, Via Matteotti, 1, Bovisio**
**Masciago (Milano) (IT)**

(74) Vertreter: **Schulze Horn, Stefan, Dipl.-Ing. et al,**
**Patentanwälte Dipl.-Ing. S. Schulze Horn M.SC. Dr. H.**
**Hoffmeister Goldstrasse 36, D-4400 Münster (DE)**

ACTORUM AG

## Beschreibung

Die vorliegende Erfindung betrifft einen Luftdruck-Regler bzw. Druckminderer, insbesondere zur Steuerung des Bremsdruckes von Fahrzeug-Vorderachsbremszylindern als Funktion des Steuerdruckes, der im Gattungsbegriff des Anspruchs 1 angegeben ist. Ein solcher Luftdruck-Regler ist aus dem Dokument US-A-3 769 997 bekannt.

Luftdruck-Regler bzw. Druckminderer dieser Gattung sind auch durch das Dokument US-A-3 492 052 bekannt. Ihre Aufgabe ist es, in den Bremsorganen der Vorderachse eines Fahrzeuges zu Beginn der Bremsung einen geringeren Druck als den Steuerdruck zu gewährleisten. Später, mit Fortschreiten und mit Intensivierung des Bremsvorganges, soll der Betriebsdruck gleich dem Steuerdruck sein. Diese Druckreglung wird vorgenommen, um die Abnutzung der Dichtungen und Beläge der Bremsorgane während der oftmaligen und wenig intensiven Betätigungen der Bremsen des Fahrzeuges, also während der Verlangsamungsbremsungen, zu verringern. Die Bremsorgane der Vorderachse sind gegenüber denjenigen der Hinterachse stärker dimensioniert, um dann, wenn der Fahrer eine brüske Bremsung durchführt und das Bremspedal ganz durchtritt, eine entsprechende Bremsleistung zu gewährleisten.

Jedoch ist diese stärkere Dimensionierung zur Gewährleistung einer angemessenen, stärkeren Bremskraft nicht erforderlich für die oftmaligen, kurzzeitigen und wenig intensiven Bremsungen zur Verlangsamung der Fahrt; diese Bremsungen verursachen daher bei ungesteuerter Aufbringung des Bremsdruckes eine rasche Abnutzung der Bremsbeläge und -dichtungen.

Die Luftdruck-Regler bzw. Druckminderer der eingangs genannten Art mindern in der ersten Bremsphase bei niedrigeren Werten des Steuerdrucks den auf die stärker dimensionierten Bremsorgane erteilten Druck bei niedrigen Werten des Steuerdrucks unter entsprechend geringerer Abnutzung der Beläge. Dagegen sind die Regler nicht wirksam bei starken Betätigungsdrücken, also während brüsker Bremsungen, so dass der auf die stärker dimensionierten Bremsorgane wirkende Druck gleich dem Steuerdruck ist, so dass eine wirksame Bremsung unter diesen Verhältnissen gewährleistet ist.

Der Nachteil der bekannten Regler mit zwei Kolben liegt somit darin, mit diesen nur einen bestimmten Bremsdruck mittels des Steuerdrucks zu erzielen, so dass das gleiche Gerät nicht bei Fahrzeugen benutzt werden kann, welche andere Bremsverhältnisse erfordern.

Eine andere Gattung bekannter Druckregler bzw. Druckminderer US-A-3 420 256 gestattet unterschiedliche Bremsdruckstärken. Bei diesen benötigt der Regler jedoch einen Hilfskolben, der senkrecht zu den Steuer- und Reaktionskolben ausgerichtet ist und der mittels einer vorgespannten Feder beaufschlagt wird, deren Kraft seitlich einstellbar ist. Ausserdem steht diese Feder ständig unter Spannung, also auch dann, wenn das Gerät ruht (im Magazin) und drückt auf eine Dichtung, die sich im Laufe der Zeit aufgrund der Belastung abnützt. Auch ist diese Art Druckregler sehr sperrig aufgrund der Anordnung der Kolben. Sie ist ausserdem teurer aufgrund der Zusammensetzung aus vielen Bestandteilen.

Aufgabe der vorliegenden Erfindung ist damit die Schaffung eines Luftdruck-Reglers der eingangs genannten Art, der einfach ausgebildet ist, wirtschaftlich kostengünstig und wenig sperrig zu bauen ist und der es ausserdem gestattet, unterschiedliche Bremsdrücke und Druckabhängigkeitsverläufe in den Bremsorganen herzustellen. Diese Eigenschaften sollen zudem mit bereits Bestandteilen des Gerätes bildenden Elementen durchgeführt werden können. Zur Lösung dieser Aufgabe sind die im kennzeichnenden Teil des Patentanspruchs 1 dargelegten Gestaltungsmerkmale vorgesehen.

In einem einfachen Ausführungsbeispiel besteht das elastische Organ aus einer zylindrischen Feder, welche im Inneren der Kolben angeordnet ist und vorzugsweise spannungslos in Ruhelage des Gerätes ist. Gemäss einem anderen wichtigen Aspekt der Erfindung wird der grösste Hub des Reaktionskolbens und damit das Merkmal des Bremsdruckes der beteiligten Bremselemente mittels Verstellung eines Stutzens in axiale Richtung verändert, der bereits im Gerät zum Auslass der Luft ins Freie vorgesehen ist.

Der Luftdruck-Regler gemäss Erfindung wird im folgenden unter Bezugnahme auf die anliegende Zeichnung näher erläutert. Die Figuren der Zeichnung zeigen im einzelnen:

Figur 1 das Schema einer Druckluft-Bremsanlage eines Motorfahrzeugs, bei dem die Bremsorgane der Vorderachse gesteuert werden,

Figur 2 einen Schnitt in Achsenrichtung durch einen Regler in einem Ausführungsbeispiel,

Figur 3 die Funktionsdarstellung des Bremsdrucks ($P_r$) in Abhängigkeit vom Steuerdruck ($P_c$).

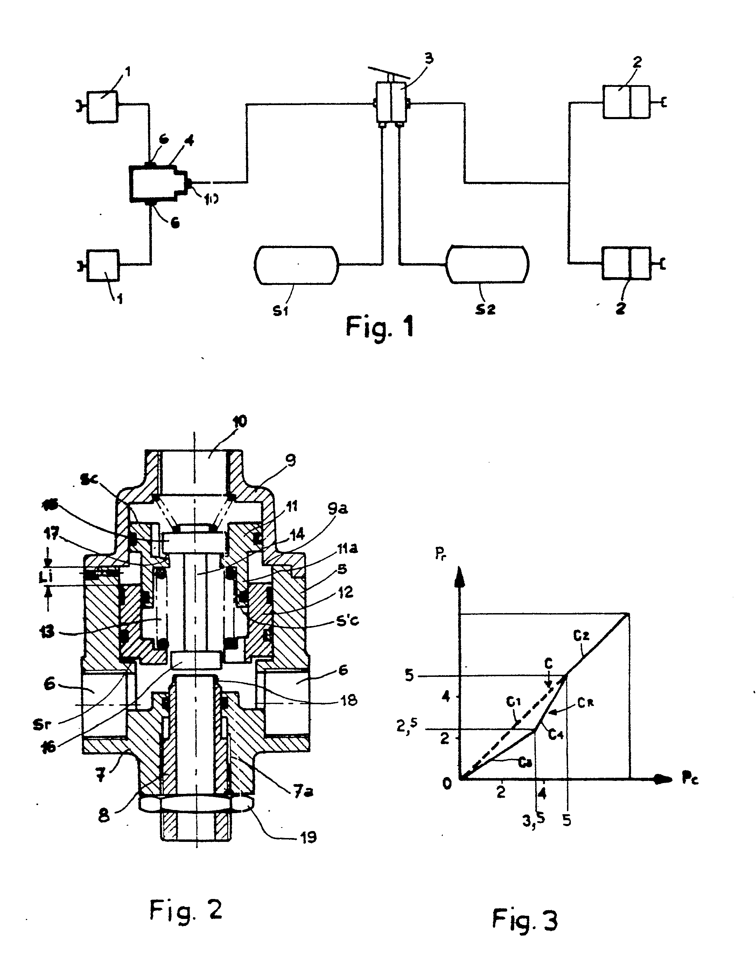

In Figur 1 sind mit 1 die Bremszylinder der motortragenden Vorderachse eines Fahrzeuges, mit 2 die Bremszylinder der Hinterachse, mit 3 ein Druckluftverteiler und mit $S_1$ und $S_2$ zwei Versorgungskammern bezeichnet. Ein Druckregler 4 ist in den Versorgungskreis der Vorderachs-Bremselemente 1 eingeschaltet. Die Elemente der Vorderachse werden deshalb überwacht und gesteuert, da sich bei ihnen die dynamischen Kräfte während des Bremsvorganges besonders stark auswirken.

Bei dem Betrieb und der Dimensionierung der Einzelteile wird angenommen, dass die Bremsorgane der Vorderachse stärker dimensioniert sind als die der Hinterachse; und zwar entweder in bezug auf den Durchmesser der Bremszylinder oder auf die Länge der Betätigungshebel der Bremsen.

Der in Figur 2 detailliert dargestellte Druckregler 4 ist mit einem Gehäuse 5 versehen, das seitlich zwei Anschlüsse 6 für die Leitungen zu den Bremselementen 1 aufweist. Im Boden 7 ist ein durchbohrter Stutzen 8 zum Ablassen der Luft ins Freie vorgesehen. Der Luftdruck-Regler 4 ist nach oben mit einem Deckel 9 geschlossen, der mit einem Anschluss 10 versehen ist, an den sich die Verbindungsleitung zum Druckluft-Verteiler 3 anschliesst.

Der Luftdruck-Regler 4 enthält zwei gesonderte, axial ausgerichtete und bewegliche Kolben, nämlich einen Steuerkolben 11 und einen Reaktionskolben 12, die voneinander mittels eines elastischen Organs getrennt sind, das aus einer Zylinderfeder 13 besteht. Die Feder 13 ist an je einem Innenbund im Inneren der Kolben 11 und 12 gelagert und umgibt einen beweglichen Ventilkörper 14, der an seinen beiden Enden die Dichtungen 15 und 16 trägt. Die erste Dichtung 15 wirkt mit einem Sitz 17 des Steuerkolbens 11 zusammen, so dass sich ein Einlassventil (15, 17) ergibt; die zweite Dichtung 16 wirkt mit einem Sitz 18 am Stutzen 8 zusammen, so dass sich ein Auslassventil (16, 18) ergibt. Die Zylinderfeder 13, welche sich an den zwei gegenüberliegenden Bunden des Kolbens 11 bzw. 12 abstützt, ist in der Ruhestellung des Reglers spannungslos, während sie in Funktionsstellung zusammengepresst wird, um die Belastungen von dem einen auf den anderen Kolben zu übertragen, wie im folgenden erläutert wird.

Der Reaktionskolben 12 verstellt sich bei wirkender Abdichtung innen im Gehäuse 5, ebenso verstellt sich der Kolben 11 bei wirkender Abdichtung im Gehäuse 5. Abdichtungen des Kolbens 11 sind vorhanden im Bereich des Deckels 9 und in einer Erweiterung 11a, innen am Kolben 12, im Bereich des Bundes für die Zylinderfeder 13.

Die obere Stirnfläche $S_c$ des Kolbens 11, die dem Steuerdruck ausgesetzt ist, ist kleiner als die untere Stirnfläche $S_r$ des Kolbens 12, auf die der Reaktions- oder Gegendruck während der Bremsung wirkt, jedoch grösser als die Druckfläche $S'c$ des Teils 11a vom Kolben 11, der in den Reaktionskolben 12 dringt.

Der maximale Hub Li, den der Reaktionskolben 12 im Gehäuse 5 ausführen kann, wird von einem Deckelbund 9a des Deckels 9 begrenzt, gegen den der Kolben stösst.

Dieser maximale Hub Li bestimmt das Maximum des Steuerdruckes $P_c$. Bei Erreichen des maximalen Reaktionsdruckes gleicht sich der Steuerdruck diesem an. Jedoch kann der maximale Hub Li verändert werden, indem die Ausgangsstellung des Reaktionskolbens 12 verändert wird. Das ist möglich durch Verstellung des Stutzens 8 in der Bohrung 7a, die am Boden 7 des Gehäuses 5 ausgenommen ist. Vorteilhafterweise sind der Stutzen 8 und die Bohrung 7 mit Gewinde versehen, so dass der Stutzen 8 durch einfaches Drehen verstellt wird. In der erwünschten Axiallage wird mit einer Mutter 19 der im Gewinde gehaltene Stutzen 8 festgelegt.

Funktionsbeschreibung (vergl. Figur 3)
Figur 3 zeigt die Funktion des Bremdruckes $P_r$ in Abhängigkeit vom Steuerdruck $P_c$. $P_r$ ist der Druck an den Anschlüssen 6 und ist daher auch der Druck in den Bremszylindern 1. $P_c$ ist dagegen der Druck am Eingangsanschluss 10. Fehlt der Regler 4, so ist der in den Bremszylindern 1 wirkende Druck gegeben durch die Winkelhalbierende C, welche durch einen Anfangsabschnitt $C_1$ gebildet

ist, der der Deutlichkeit halber gestrichelt gezeichnet ist, und durch einen weiteren, durchgehend gezeichneten Abschnitt $C_2$.

Daher ist unter dieser Voraussetzung der Steuerdruck $P_c$ am Anschluss 6 des Druckreglers 3 gleich dem Bremsdruck in den Bremszylindern 1. Ist dagegen der Druckregler 4 dem Versorgungskreis der Bremszylinder 1 zugeschaltet, wird die Bremscharakteristik durch den Kurvenzug $C_R$ gegeben, der aus dem Anfangsabschnitt $C_3$, einem Mittelabschnitt $C_4$ und einem Endabschnitt besteht, der mit $C_2$ zusammenfällt.

Für einen bestimmten maximalen Hub Li des Reaktionskolbens 12 sei der Höchstwert des Steuerdrucks $P_c$ am Anschluss 10 mit 3,5 bar angenommen. Oberhalb des Steuerdrucks steigt der Reaktionsdruck $P_r$ an den Anschlüssen 6 an, bis zum Angleichen an den Steuerdruck. Es sei gleichfalls angenommen, dass der Wert $P_c$ = 3,5 bar einem Reaktionsdruck $P_r$ = 2,5 bar entspricht, und dass der Abschnitt $C_4$ den Endabschnitt $C_2$ mit einem Druck von 5 bar erreicht. Während der Bremsung, bei Betätigung des Bremspedals, bewirkt die zum Eingangsanschluss 10 des Druckreglers 4 gelangende Luft die Senkung der beweglichen Teile, in Verbindung mit den Kolben 11 12, bei entsprechender Schliessung des Auslassventils 16, 18 und Öffnung des Einlassventils 15, 17. Das Senken des Kolbens 12 wird durch die Feder 13 bewirkt, die zwischen den beiden Kolben 11 und 12 angeordnet ist.

Druckluft dringt dann durch das geöffnete Einlassventil 15, 17, gelangt zu den Anschlüssen 6 und von hier aus in die Bremszylinder 1.

Da die untere Stirnfläche oder Schubebene $S_r$ des Reaktionskolbens 12 grösser ist als die obere Stirnfläche oder Schubfläche $S_c$ des Steuerkolbens 11, erweist sich der Reaktionsdruck $P_r$ geringer als der Steuerdruck $P_c$. Bei allmählicher Steigerung des Drucks $P_c$ verstellt sich der Kolben 12 nach oben unter Belastung der Feder 13 bis zum Auftreffen auf den Deckelbund 9a. Bei dieser ersten Bremsphase ist der Verlauf des Reaktionsdruckes $P_r$ durch den Abschnitt $C_3$ der Kurve $C_R$ dargestellt.

Die Werte $P_c$ = 3,5 bar und $P_r$ = 2,5 bar sind diejenigen am Eingangsanschluss 10 bzw. am Ausgang 6 in dem Moment, wenn der Kolben 12 den Höchsthub Li zurückgelegt hat, während der Kolben 12 in der Endstellung verbleibt und auf den Anschlag 9a trifft.

Von dann ab verbleibt der Kolben 12 in der Endstellung des Hubs. Die Steuerdruck-Steigerung entspricht einem Antwortdruck, der bis zum Erreichen des Steuerdrucks $P_c$ = 5 bar ansteigt. Diese zweite Bremsphase wird durch den Zwischenabschnitt $C_4$ der Kurve $C_R$ dargestellt. Der Wert des Steuerdrucks $P_c$ = 3,5 bar vom Anfang der Phase $C_4$ ist abhängig von dem maximalen Hub Li des Kolbens 12. Sollen abweichende Druckwerte erzielt werden, so genügt es, den maximalen Hub Li zu ändern, und zwar mittels Verstellung des Stutzens 8.

Durch Verstellung des Stutzens 8 relativ zum Gehäuse 5 nach aussen wird der Höchsthub des Kolbens 12 vergrössert, damit wird auch die Phase $C_3$ vergrössert. Wird dagegen der Stutzen 8 nach innen verstellt, wird der Höchsthub und die Phase $C_3$ verkleinert. Immer bleibt der Abschnitt $C_4$ zu sich selbst parallel ausgerichtet; seine Steigung wird vom Verhältnis der Flächen $S_c$ und $S'_c$ des Steuerkolbens 11 bestimmt.

Soll für ein bestimmtes Gerät der Wert des Höchststeuerdrucks, beispielsweise $P_c$ max = 3,5 bar geändert werden, oberhalb dessen der Reaktionsdruck sich dem Steuerdruck anzupassen trachtet, genügt eine axiale Verstellung des Stutzens 8. Damit können auch unterschiedliche Bremsverhältnisse in bezug auf die Vorderachse erhalten werden. Der Regelbereich der Vorrichtung ist dargestellt durch die Dreiecksfläche zwischen den Abschnitten $C_3$ und $C_4$, deren Schnittpunkt sich ändern kann, und dem Abschnitt $C_1$, der von ihnen unterfahren wird.

Bei Fortdauer der Bremsung mit Werten $P_c$ oberhalb 5 bar, entsteht eine Angleichung zwischen dem Druck $P_c$ und dem $P_r$. Der Druck ist dann im Anschluss 10 gleich dem Druck im Anschluss 6. Die Funktion des Reglers ist es daher, den Reaktionsdruck $P_r$ nur bei niedrigen Steuerdruckwerten $P_c$ herabzusetzen, während bei hohen Druckwerten keine Änderung erfolgen soll.

Vorstehend wurde ein Ausführungsbeispiel in bezug auf die Wirkung der Vorderachse einer Zugmaschine behandelt. Es ist für den Fachmann verständlich, dass die Prinzipien der Erfindung auch auf Regelungen anderer Bremssysteme möglich ist.

**Patentansprüche**

1. Luftdruck-Regler, insbesondere zur Steuerung des Bremsdruckes von Fahrzeug-Vorderachsbremszylindern (1) als Funktion des Steuerdruckes, mit einem Gehäuse (5), in dem ein Steuerkolben (11), ein Reaktionskolben (12) und ein beweglicher Ventilkörper (14) sich befinden, und in dem der Steuerkolben (11) und der Reaktionskolben (12) über ein elastisches Organ (13) miteinander in Verbindung stehen, das die Belastungen der Kolben (11, 12) aufeinander überträgt, wobei der Maximal-Hub des Reaktionskolbens (12) entsprechend dem Höchstwert des zu erreichenden Steuerdruckes festlegbar ist, und der bewegliche Ventilkörper (14) mit dem Steuerkolben (11) sowohl eine Einlassventil- als auch eine Auslassventilanordnung (15, 17; 16, 18) ergibt, wobei letztere mit einem verschliessbaren Gehäuseauslassöffnungssitz (18) zusammenwirkt und wobei alle die obengenannten Komponente des Druckreglers eine Mittenlängsachse aufweisen, dadurch gekennzeichnet, dass zur Veränderung des Höchstwertes des Steuerdruckes der Sitz (18) der Auslassventilanordnung (16, 18) in axialer Richtung dieser Mittenlängsachse verstellbar ist.

2. Luftdruck-Regler nach Anspruch 1, dadurch gekennzeichnet, dass der Sitz (18) des Auslassventils (16, 18) am inneren Ende eines Stutzens (8) vorgesehen ist, welcher mittels Gewinde in einer Axialbohrung im Gehäuseboden (7) gehaltert ist.

**Claims**

1. An air pressure controller, more particularly for controlling the braking pressure of front-wheel cylinders (1) of vehicles in dependence upon the actuating pressure, the controller having a casing (5) which receives a control piston (11), a reaction piston (12) and a moving lid (14) and in which the control piston (11) and reaction piston (12) are interconnected by way of a resilient member (13), the same transmitting the loads of the pistons (11, 12) to one another, the maximum stroke of the reaction piston (12) being determined in accordance with the required maximum value of the actuating pressure, the moving lid (14) so co-operating with the control piston (11) as to provide both an inlet and outlet valve arrangement (15, 17; 16, 18), the same co-operating with a closable outlet orifice seat (18) in the casing, all the controller components hereinbefore mentioned having a central longitudinal axis, characterised in that to vary the maximum value of the actuating pressure the seat (18) of the outlet valve arrangement (16, 18) is movable axially of such central longitudinal axis.

2. A controller according to claim 1, characterised in that the seat (18) of the outlet valve (16, 18) is disposed at the inner end of a connection (8) retained by means of screwthreading in an axial bore in the casing base (7).

**Revendications**

1. Régulateur de pression d'air, en particulier pour commander la pression de freinage des cylindres de frein (1) de l'essieu avant d'un véhicule en fonction de la pression de commande, comportant un carter (5) dans lequel se trouvent un piston de commande (11), un piston de réaction (12) et une soupape mobile (14), et dans lequel le piston de commande (11) et le piston de réaction (12) sont réunis l'un à l'autre par l'intermédiaire d'un organe élastique (13) qui transmet de l'un sur l'autre les charges appliquées sur les pistons (11, 12), étant précisé que l'on peut déterminer la course maximale du piston de réaction (12) en fonction de la valeur maximale de la pression de commande à atteindre; et étant précisé que la soupape mobile (14) donne avec le piston de commande (11) aussi bien un robinet à soupape d'entrée qu'un robinet à soupape de sortie (15, 17; 16, 18), ce dernier collaborant avec un siège d'ouverture de sortie (18), obturable, du carter et tous les composants, mentionnés ci-dessus, du régulateur de pression présentant un axe longitudinal médian, caractérisé en ce que, pour modifier la valeur maximale de la pression de commande, le siège (18) du robinet à soupape de sortie est déplaçable (16, 18) dans la direction axiale de cet axe longitudinal médian.

2. Régulateur de pression d'air selon la revendication 1, caractérisé en ce que le siège (18) du robinet à soupape de sortie (16, 18) est prévu à l'extrémité intérieure d'une tubulure (8) fixée dans le fond du carter (7) au moyen d'un filetage dans un alésage axial.

Fig. 1

Fig. 2

Fig. 3